# EUROPEAN PATENT SPECIFICATION

(11) **EP 4 444 014 B1**
(45) Date of publication and mention of the grant of the patent: **28.10.2026**
(21) Application number: 22901827.0
(22) Date of filing: 01.12.2022
(51) Int. Cl.: H04W 74/0816, H04W 76/15, H04L 1/1867, H04L 1/08, H04W 84/12

(54) **METHOD AND APPARATUS FOR RECOVERY FROM TRANSMISSION ERROR IN COMMUNICATION SYSTEM**
VERFAHREN UND VORRICHTUNG ZUR WIEDERHERSTELLUNG NACH ÜBERTRAGUNGSFEHLERN IN EINEM KOMMUNIKATIONSSYSTEM
PROCÉDÉ ET APPAREIL DE RÉCUPÉRATION À PARTIR D'UNE ERREUR DE TRANSMISSION DANS UN SYSTÈME DE COMMUNICATION

(30) Priority: 01.12.2021 KR 20210170286
(43) Date of publication of application: 09.10.2024
(73) Proprietor: Hyundai Motor Company, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR)
(74) Representative: Viering, Jentschura & Partner mbB Patent- und Rechtsanwälte
(86) International application number: PCT/KR2022/019370
(87) International publication number: WO 2023/101469

(56) References cited:
- WO-A1-2021/107685
- WO-A1-2021/210794
- WO-A1-2021/225328
- WO-A1-2021/225367
- KR-A- 20210 122 138
- KR-B1- 102 212 170
- US-A1- 2021 211 375
- YONGHO SEOK (MEDIATEK): "Error Recovery in Synchronous Multiple Frame Transmission", vol. 802.11 EHT; 802.11be, 20 October 2020 (2020-10-20), pages 1 - 11, XP068173905, Retrieved from the Internet <URL:https://mentor.ieee.org/802.11/dcn/20/11-20-1278-00-00be-error-recovery-in-synchronous-multiple-frame-transmission.pptx> [retrieved on 20201020]

## Description

### [Technical Field]

The present disclosure relates to a wireless local area network (LAN) communication technique, and more particularly, to a technique for recovering a transmission error in a non-simultaneous transmit and receive (NSTR) device.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

Improvements to the conventional carrier sensing multiple access/collision avoidance (CSMA) scheme may be required for low-latency operations in a wireless LAN. To transmit data based on the CSMA scheme, a communication node may check whether a channel is in an idle state by performing a channel access procedure. When the channel is in the idle state, the communication node may transmit data. That is, the communication node may compete with other communication nodes to transmit data. Since it takes time due to competition, there may be limitations in quickly transmitting data.

Meanwhile, a non-simultaneous transmit and receive (NSTR) device may not be able to perform transmission and reception operations simultaneously. Therefore, to carry out transmission and reception operations of data, it may be necessary to synchronize a transmission time and a reception time. Even when time synchronization is acquired, an allowable time for synchronization mismatch may exist. In this case, if a retransmission procedure of the data is performed when a data transmission error occurs, communication may be impossible in the NSTR device. Methods for resolving the above-mentioned problems are required.

Meanwhile, the technologies that are the background of the present disclosure are written to improve the understanding of the background of the present disclosure and may include content that is not already known to those of ordinary skill in the art to which the present disclosure belongs.

The prior-art IEEE contribution YONGHO SEOK (MEDIATEK): "Error Recovery in Synchronous Multiple Frame Transmission" describes a non-STR MLD holding a TXOP, transmits a data frame on a first link and a data frame on a second link within the TXOP. A transmission failure is recognized based on a acknowledgement timeout from a transmission end time of the data frames.

### [Disclosure]

### [Technical Problem]

The present disclosure for resolving the above-described problems is directed to providing a method and an apparatus for recovering a transmission error in an NSTR device.

### [Technical Solution]

A method of a first device, according to a first exemplary embodiment of the present disclosure for achieving the above-described objective, comprising: configuring a transmit opportunity (TXOP); transmitting, to a second device, a first data frame within the TXOP on a first link; transmitting, to the second device, a second data frame within the TXOP on a second link; performing a monitoring operation for receiving a first reception response frame for the first data frame on the first link during a preset time from a transmission end time of the first data frame; in response that the first reception response frame is not received, determining whether to perform a retransmission operation of the first data frame by considering a state of the second link; and in response to determining the retransmission operation not to be performed, early terminating the TXOP of the first link among the TXOPs on the first link, and performing a backoff operation.

Transmission of the first data frame and transmission of the second data frame may overlap at least partially in time.

The method may further comprise: performing the retransmission operation of the first data frame in response that the backoff operation succeeds on the first link.

The state of the second link may be a state where a time period, in which the retransmission operation of the first data frame is to be performed on the first link, overlaps at least partially in time with a time period, in which a reception operation of a second reception response frame for the second data frame is performed on the second link.

A case where the retransmission operation is determined not to be performed may correspond to a case where the retransmission operation interferes with frame(s) transmitted or received on the second link.

The TXOP may be configured in response that a reception response frame for an initial data frame transmitted to the second device is received, the configuring of the TXOP may be performed on both the first link and the second link, and the preset time may be a point coordination function (PCF) interframe space (PIFS).

The first device may be a non-simultaneous transmit and receive (NSTR) station (STA) multi-link device (MLD), the second device may be an access point (AP) MLD, operations on the first link may be performed between a first STA affiliated with the first device and a first AP affiliated with the second device, and operations on the second link may be performed between a second STA affiliated with the first device and a second AP affiliated with the second device.

The method may further comprise: transmitting a third data frame on the second link after the backoff operation starts on the first link, wherein the backoff operation on the first link may be stopped in response that a transmission operation of the third data frame is performed on the second link, and the backoff operation on the first link may be resumed after transmission of the third data frame on the second link ends.

The method may further comprise: in response that the backoff operation succeeds on the first link, and a delay time does not elapse from a transmission end time of the third data frame on the second link, maintaining a backoff counter value of the backoff operation at 0; and in response that the delay time elapses, performing the retransmission operation of the first data frame on the first link.

The method may further comprise: in response that the backoff operation succeeds before a reception end time of a second reception response frame for the second data frame on the second link, maintaining a backoff counter value of the backoff operation at 0; and performing the retransmission operation of the first data frame on the first link after the reception end time of the second reception response frame on the second link.

The method may further comprise: transmitting a third data frame on the second link after the reception end time of the second reception response frame, wherein an end time of the retransmitted first data frame and an end time of the third data frame may be set to be equal.

A first device, according to a second exemplary embodiment of the present disclosure for achieving the above-described objective, comprising a processor, and the processor causes the first device to: configure a transmit opportunity (TXOP); transmit, to a second device, a first data frame within the TXOP on a first link; transmit, to the second device, a second data frame within the TXOP on a second link; perform a monitoring operation for receiving a first reception response frame for the first data frame on the first link during a preset time from a transmission end time of the first data frame; in response to that the first reception response frame is not received, determine whether to perform a retransmission operation of the first data frame by considering a state of the second link; and in response to determining the retransmission operation not to be performed, early terminate the TXOP of the first link among the TXOPs on the first link, and perform a backoff operation.

The processor may further cause the first device to perform the retransmission operation of the first data frame in response that the backoff operation succeeds on the first link.

The state of the second link may be a state where a time period, in which the retransmission operation of the first data frame is to be performed on the first link, overlaps at least partially in time with a time period, in which a reception operation of a second reception response frame for the second data frame is performed on the second link.

The TXOP may be configured in response that a reception response frame for an initial data frame transmitted to the second device is received, the configuring of the TXOP may be performed on both the first link and the second link, and the preset time may be a point coordination function (PCF) interframe space (PIFS).

The first device may be a non-simultaneous transmit and receive (NSTR) station (STA) multi-link device (MLD), the second device may be an access point (AP) MLD, operations on the first link may be performed between a first STA affiliated with the first device and a first AP affiliated with the second device, and operations on the second link may be performed between a second STA affiliated with the first device and a second AP affiliated with the second device.

The processor may further cause the first device to transmit a third data frame on the second link after the backoff operation starts on the first link, wherein the backoff operation on the first link may be stopped in response that a transmission operation of the third data frame is performed on the second link, and the backoff operation on the first link may be resumed after transmission of the third data frame on the second link ends.

The processor may further cause the first device to: in response that the backoff operation succeeds on the first link, and a delay time does not elapse from a transmission end time of the third data frame on the second link, maintain a backoff counter value of the backoff operation at 0; and in response that the delay time elapses, perform the retransmission operation of the first data frame on the first link.

The processor may further cause the first device to: in response that the backoff operation succeeds before a reception end time of a second reception response frame for the second data frame on the second link, maintain a backoff counter value of the backoff operation at 0; and perform the retransmission operation of the first data frame on the first link after the reception end time of the second reception response frame on the second link.

The processor may further cause the first device to transmit a third data frame on the second link after the reception end time of the second reception response frame, wherein an end time of the retransmitted first data frame and an end time of the third data frame may be set to be equal.

### [Advantageous Effects]

According to the present disclosure, in the context of a multi-link operation involving an NSTR device, a reception operation on the first link may be withheld to avoid interference with a transmission operation on the second link. In such a scenario, data (such as a data frame) can be effectively received through the reception operation, and any data errors occurring on a link can be promptly recovered. Consequently, the reliability of data transmission can be improved, and delays in data transmission can be minimized.

### [Description of Drawings]

FIG. 1 is a block diagram illustrating a first exemplary embodiment of a communication node constituting a wireless LAN system.
FIG. 2 is a conceptual diagram illustrating a first exemplary embodiment of a multi-link configured between multi-link devices (MLDs).
FIG. 3 is a timing diagram illustrating a first exemplary embodiment of an error recovery method of an NSTR device in multi-link synchronized transmission.
FIG. 4 is a timing diagram illustrating a second exemplary embodiment of an error recovery method of an NSTR device in multi-link synchronized transmission.
FIG. 5 is a timing diagram illustrating a third exemplary embodiment of an error recovery method of an NSTR device in multi-link synchronized transmission.
FIG. 6 is a timing diagram illustrating a fourth exemplary embodiment of an error recovery method of an NSTR device in multi-link synchronized transmission.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a 'wireless communication network'.

In exemplary embodiments, 'configuration of an operation (e.g., transmission operation)' may mean that 'configuration information (e.g., information element(s), parameter(s)) for the operation' and/or 'information indicating to perform the operation' is signaled. 'Configuration of an information element (e.g., parameter)' may mean that the information element is signaled. 'Configuration of a resource (e.g., resource region)' may mean that setting information of the resource is signaled.

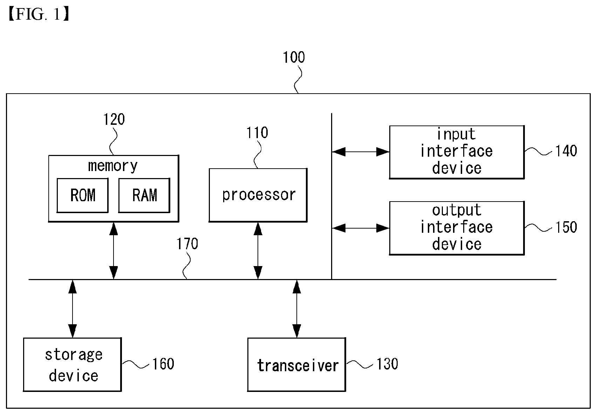

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. An access point may refer to 'AP', and a station may refer to 'STA' or 'non-AP STA'. An operating channel width supported by an AP may be 20 megahertz (MHz), 80MHz, 160MHz, or the like. An operating channel width supported by a STA may be 20MHz, 80MHz, or the like.

The communication node 100 may include at least one processor 110, a memory 120, and a transceiver 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The respective components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute program commands stored in at least one of the memory 120 and the storage device 160. The processor 110 may refer to a central processing unit (CPU), a graphics processing unit (GPU), or a dedicated processor on which the methods according to the exemplary embodiments of the present invention are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

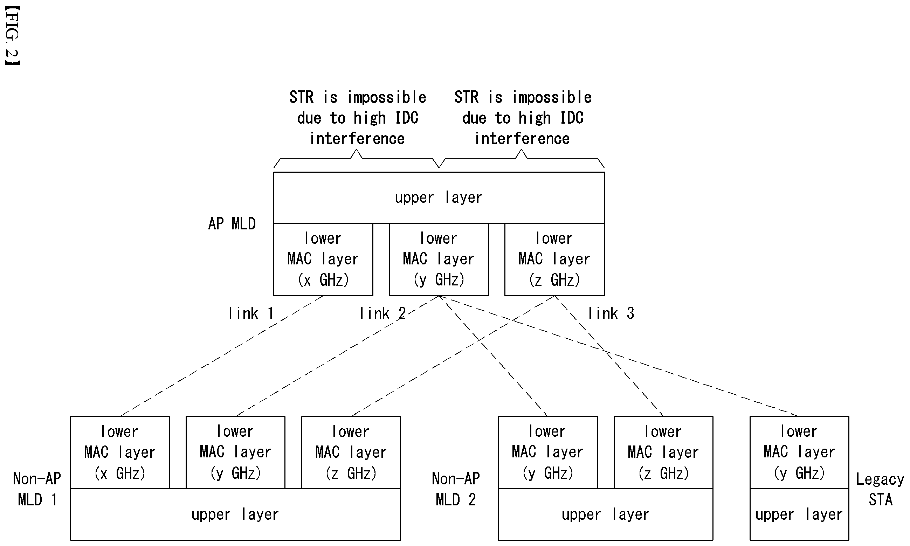

FIG. 2 is a conceptual diagram illustrating a first exemplary embodiment of a multi-link configured between multi-link devices (MLDs).

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In the instant case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In the instant case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between a link 1 and a link 2 in the frequency domain) is sufficient, the MLD may be able to perform an STR operation. For example, the MLD may transmit a physical layer convergence procedure (PLCP) protocol data unit (PPDU) 1 using the link 1 among multiple links, and may receive a PPDU 2 using the link 2 among multiple links. On the other hand, if the MLD performs an STR operation when the band separation between multiple links is not sufficient, in-device coexistence (IDC) interference, which is interference between the multiple links, may occur. Accordingly, when the bandwidth separation between multiple links is not sufficient, the MLD may not be able to perform an STR operation. A link pair having the above-described interference relationship may be a non-simultaneous transmit and receive (NSTR)-limited link pair. Here, the MLD may be referred to as 'NSTR AP MLD' or 'NSTR non-AP MLD'.

For example, a multi-link including a link 1, a link 2, and a link 3 may be configured between an AP MLD and a non-AP MLD 1. When a band separation between the link 1 and the link 3 is sufficient, the AP MLD may perform an STR operation using the link 1 and the link 3. That is, the AP MLD may transmit a frame using the link 1 and receive a frame using the link 3. When a band separation between the link 1 and the link 2 is insufficient, the AP MLD may not be able to perform an STR operation using the link 1 and the link 2. When a band separation between the link 2 and the link 3 is not sufficient, the AP MLD may not be able to perform an STR operation using the link 2 and the link 3.

Meanwhile, in a wireless LAN system, a negotiation procedure for a multi-link operation may be performed in an access procedure between a station and an access point. A device (e.g., access point, station) that supports multiple links may be referred to as 'multi-link device (MLD)'. An access point supporting multiple links may be referred to as 'AP MLD', and a station supporting multiple links may be referred to as 'non-AP MLD' or 'STA MLD'. The AP MLD may have a physical address (e.g., MAC address) for each link. The AP MLD may be implemented as if an AP in charge of each link exists separately. A plurality of APs may be managed within one AP MLD. Therefore, coordination between a plurality of APs belonging to the same AP MLD may be possible. A STA MLD may have a physical address (e.g., MAC address) for each link. The STA MLD may be implemented as if a STA in charge of each link exists separately. A plurality of STAs may be managed within one STA MLD. Therefore, coordination between a plurality of STAs belonging to the same STA MLD may be possible.

For example, an AP1 of the AP MLD and a STA1 of the STA MLD may each be responsible for a first link and perform communication using the first link. An AP2 of the AP MLD and a STA2 of the STA MLD may each be responsible for a second link and perform communication using the second link. The STA2 may receive status change information for the first link on the second link. In the instant case, the STA MLD may collect information (e.g., status change information) received on the respective links, and control operations performed by the STA1 based on the collected information.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a STA is described, an AP corresponding thereto may perform an operation corresponding to the operation of the STA. Conversely, when an operation of an AP is described, a STA corresponding thereto may perform an operation corresponding to the operation of the AP. In exemplary embodiments, an operation of a STA may be interpreted as an operation of a STA MLD, an operation of a STA MLD may be interpreted as an operation of a STA, an operation of an AP may be interpreted as an operation of an AP MLD, and an operation of an AP MLD may be interpreted as an operation of an AP. An AP in an AP MLD may refer to an AP affiliated with the AP MLD, and a STA in a STA MLD may refer to a STA affiliated with the STA MLD.

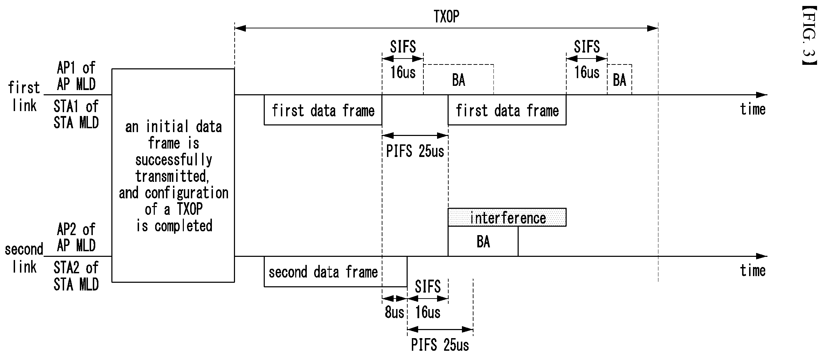

FIG. 3 is a timing diagram illustrating a first exemplary embodiment of an error recovery method of an NSTR device in multi-link synchronized transmission.

As shown in FIG. 3, an NSTR device may not be able to perform a reception operation on a second link of a multi-link while the NSTR device is performing a transmission operation on a first link of the multi-link. Therefore, the NSTR device may synchronize start and/or end times of the transmission operation and the reception operation, and may perform the transmission operation and the reception operation based on the above-described synchronized operation. In the present disclosure, the NSTR device may be an NSTR MLD, an NSTR AP MLD, an AP affiliated with an NSTR AP MLD, an NSTR STA MLD, and/or a STA affiliated with an NSTR STA MLD.

Frequencies of the respective links of the multi-link may be different. In the instant case, characteristics of each link may be different, and physical parameters of each link may also be different. Therefore, transmission times on the respective links may be different. For example, a difference between a transmission time (e.g., transmission end time) on the first link and a transmission time (e.g., transmission end time) on the second link may be up to 8us. If transmission on the second link ends within 8us from a transmission end time on the first link, the transmission times may be synchronized in a subsequent frame transmission procedure. In the present disclosure, a transmission time may refer to a transmission start time or a transmission end time, and a reception time may refer to a reception start time or a reception end time.

The STA1 of the STA MLD may successfully transmit an initial data frame on the first link. That is, the STA1 may receive a reception response frame for the initial data frame, and a transmit opportunity (TXOP) may be successfully configured. The STA1 may be a TXOP holder. The STA2 of the STA MLD may successfully transmit an initial data frame on the second link. That is, the STA2 may receive a reception response frame for the initial data frame, and a TXOP may be successfully configured. The STA2 may be a TXOP holder. In the present disclosure, a data frame may refer to data, a data unit, a physical layer protocol data unit (PPDU), a medium access control (MAC) layer protocol data unit (MPDU), and/or an aggregated (A)-MPDU. In the present disclosure, a reception response frame may be an acknowledgment (ACK) frame and/or a block ACK (BA) frame.

Each of the STA1 and the STA2 may transmit one or more data frames within the TXOP. The AP1 of the AP MLD may receive a first data frame from the STA1 on the first link, and may transmit a reception response frame for the first data frame to the STA1 after a short interframe space (SIFS) elapses from a time of receiving the first data frame. On the other hand, the AP1 may not receive the first data frame of the STA1 due to a channel error and/or interference. In the instant case, the AP1 may not be able to transmit a reception response frame to the STA1. Alternatively, although the AP1 transmits a reception response frame for the first data frame to the STA1, the STA1 may not receive the reception response frame of the AP1 due to a channel error and/or interference.

The STA1 may wait to receive a reception response frame for the first data frame from the AP1 during a point coordination function (PCF) interframe space (PIFS) from a transmission end time of the first data frame. That is, the STA1 may perform a monitoring operation (e.g., sensing operation) to receive the reception response frame. When a TXOP is configured by successful transmission of a data frame (e.g., initial data frame), and a reception response frame therefor is not received during a PIFS from a transmission end time of the data frame, a retransmission procedure of the data frame may be performed after the above-described PIFS (e.g., after a TxPIFS slot boundary).

If a reception response frame for the first data frame is not received within a PIFS from the transmission end time of the first data frame of the STA1, the STA1 may retransmit the first data frame on the first link by performing a PIFS recovery procedure.

The AP2 of the AP MLD may receive a second data frame of the STA2 of the STA MLD on the second link, and may transmit a reception response frame for the second data frame to the STA2 after a SIPS elapses from a time of receiving the second data frame. A difference between the transmission end point of the first data frame of the STA1 on the first link and a transmission end time of the second data frame of the STA2 on the second link may be greater than or equal to 8us. If the STA1 retransmits the first data frame on the first link after a PIFS (e.g., 25us) elapses from the transmission end time of the first data frame, the STA2 may not receive the reception response frame for the second data frame on the second link due to interference from the first data frame retransmitted on the first link.

For example, the STA2 may receive a response frame for the second data frame during 1us on the second link, but the STA2 may no longer receive the response frame due to interference from the first data frame retransmitted on the first link. Accordingly, the STA2 may fail to receive the reception response frame for the second data frame. If reception of the reception response frame fails, the STA2 may retransmit the second data frame after performing a backoff operation after an extended interframe space (EIFS) elapses.

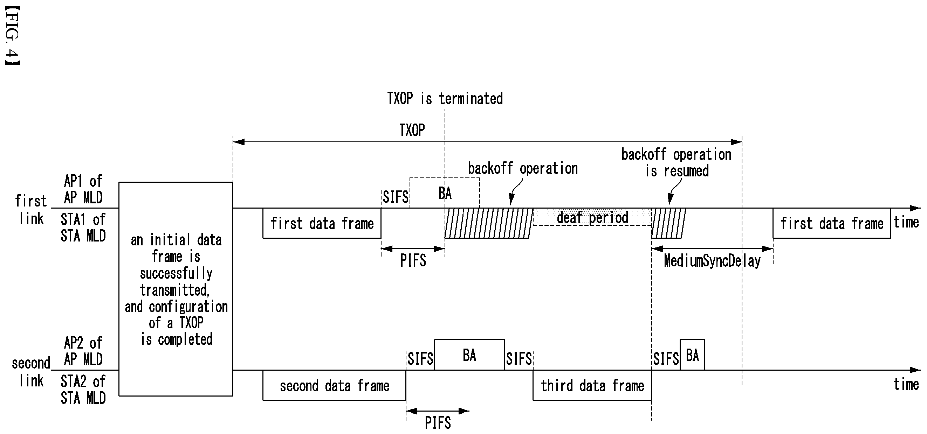

FIG. 4 is a timing diagram illustrating a second exemplary embodiment of an error recovery method of an NSTR device in multi-link synchronized transmission.

As shown in FIG. 4, the STA1 of the STA MLD may successfully transmit an initial data frame on the first link. That is, the STA1 may receive a reception response frame for the initial data frame, and a TXOP may be successfully configured. The STA1 may be a TXOP holder. The STA2 of the STA MLD may successfully transmit an initial data frame on the second link. That is, the STA2 may receive a reception response frame for the initial data frame, and a TXOP may be successfully configured. The STA2 may be a TXOP holder.

Each of the STA1 and STA2 may transmit one or more data frames within the TXOP. A difference between a transmission end time of the first data frame of the STA1 on the first link and a transmission end time of the second data frame of the STA2 on the second link may be up to 8us. The transmission end time of the first data frame of the STA1 on the first link may be before the transmission end time of the second data frame of the STA2 on the second link, and the STA1 may perform a monitoring operation (e.g., sensing operation) to receive a reception response frame for the first data frame within a preset time (e.g., PIFS) from the transmission end time of the first data frame. The STA1 may not receive the reception response frame for the first data frame within the preset time from the transmission end time of the first data frame.

The STA1 may be a TXOP holder that obtained the TXOP due to successful transmission of the initial data frame. Therefore, the STA1 may perform a PIFS recovery procedure. Although the STA1 is able to retransmit the first data frame after a PIFS elapses (e.g., after a TxPIFS slot boundary) from the transmission end time of the first data frame, if a retransmission time of the first data frame on the first link overlaps a reception time of the reception response frame for the second data frame on the second link, the STA1 may not perform the retransmission operation of the first data frame. That is, the PIFS recovery procedures may not be performed. In the instant case, the STA1 may determine whether to perform the retransmission operation of the first data frame by considering a state of the second link, and the retransmission operation of the first data frame may be postponed.

Since the TXOP needs to be terminated after a PIFS elapses from the transmission end time of the first data frame, the STA1 may not perform the retransmission operation of the first data frame on the first link, may terminate the TXOP on the first link, and may perform a backoff operation again to transmit the first data frame after the TXOP is terminated. If the STA2 transmits a third data frame on the second link while the STA1 performs the backoff operation (e.g., channel sensing operation) on the first link, a deaf period in which the STA1 is not able to perform the channel sensing operation on the first link may occur. In the instant case, the STA1 may stop the backoff operation on the first link. As another method, the STA1 may continue to perform the backoff operation on the first link. When a backoff counter value reaches 0 in the deaf period, the STA1 may select a new backoff counter value and perform a backoff operation based on the selected backoff counter value. The deaf period may be an overlapping period between a period in which the backoff operation on the first link is performed and a period in which the third data frame is transmitted on the second link. That is, the deaf period may be a period in which the STA1 cannot sense a channel (e.g., a period in which a channel state is detected as a busy state by the channel sensing of the STA1).

When the STA2 completes transmission of the third data frame on the second link, the STA1 may perform the backoff operation again on the first link, and the backoff operation may be completed on the first link. The completion of the backoff operation may mean that the backoff counter value reaches 0. A frame other than a request to send (RTS) frame may not be transmitted during *a MediumSyncDelay* (e.g., *MediumSyncDelay* timer) from an end time of the deaf period (e.g., transmission end time of the third data frame). Accordingly, the STA1 may retransmit the first data frame after *MediumSyncDelay* ends. *MediumSyncDelay* may be referred to as a medium synchronization delay or medium synchronization delay time.

If the backoff operation succeeds on the first link and *MediumSyncDelay* does not end, the STA1 may maintain the backoff counter value of the backoff operation at 0, and perform a retransmission operation of the first data frame after *MediumSyncDelay* ends.

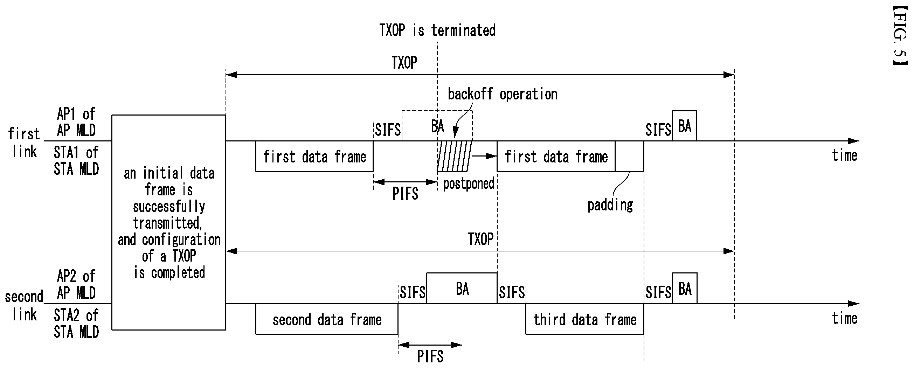

FIG. 5 is a timing diagram illustrating a third exemplary embodiment of an error recovery method of an NSTR device in multi-link synchronized transmission.

As shown in FIG. 5, the STA1 of the STA MLD may successfully transmit an initial data frame on the first link. That is, the STA1 may receive a reception response frame for the initial data frame, and a TXOP may be successfully configured. The STA1 may be a TXOP holder. The STA2 of the STA MLD may successfully transmit an initial data frame on the second link. That is, the STA2 may receive a reception response frame for the initial data frame, and a TXOP may be successfully configured. The STA2 may be a TXOP holder.

Each of the STA1 and STA2 may transmit one or more data frames within the TXOP. A difference between a transmission end time of a first data frame of the STA1 on the first link and a transmission end time of a second data frame of the STA2 on the second link may be up to 8us. The transmission end time of the first data frame of the STA1 on the first link may be before the transmission end time of the second data frame of the STA2 on the second link, and the STA1 may not receive a reception response frame for the first data frame within a PIFS from the transmission end time of the first data frame. The STA1 may be a TXOP holder that obtained the TXOP due to successful transmission of the initial data frame. Therefore, the STA1 may perform a PIFS recovery procedure. Although the STA1 is able to retransmit the first data frame after a PIFS elapses (e.g., after a TxPIFS slot boundary) from the transmission end time of the first data frame, if a retransmission time of the first data frame on the first link overlaps a reception time of the reception response frame for the second data frame on the second link, the STA1 may not perform the retransmission operation of the first data frame.

Since the TXOP needs to be terminated after a PIFS elapses from a transmission end time of a data frame, the STA1 may not perform the retransmission operation of the first data frame on the first link, may terminate the TXOP on the first link, and may perform a backoff operation again to transmit the first data frame after the TXOP is terminated. Although the TXOP is terminated, the remaining time of the initially configured TXOP may be stored until the initially configured TXOP ends. The remaining time of the TXOP may decrease over time. The backoff operation of the STA1 on the first link may succeed before a transmission start time of a third data frame of the STA2 on the second link.

The backoff operation of the STA1 on the first link may succeed before a reception end time of a reception response frame for the second data frame of the STA2 on the second link. If the backoff operation succeeds on the first link, the STA1 may wait while maintaining a backoff counter value of the backoff operation at 0. After the reception end time of the reception response frame for the second data frame of the STA2 on the second link, the STA1 may retransmit the first data frame on the first link. If a TXOP limit associated with the same access category (AC) as an AC of the data frame (e.g., the first data frame) associated with the successful backoff operation is equal to or greater than the remaining time of the TXOP, the STA1 may maintain the backoff counter value at 0, and transmit a frame in an available transmission time. If the TXOP limit associated with the same AC as the AC of the data frame associated with the successful backoff operation is less than the remaining time of the TXOP, the STA1 may wait until a backoff operation of another AC succeeds.

The backoff operation on the first link may be performed for retransmission of the first data frame. Therefore, only a success of the backoff operation of the AC corresponding to the first data frame within the remaining time of the initially configured TXOP may be considered as the success of the backoff operation. While maintaining the backoff counter value at 0, the STA1 may transmit the first data frame in an available transmission time. The available transmission time may be a time after a reception end time of a BA frame on the second link or after a time when reception of the BA frame is not interfered with. If the length (e.g., transmission end time) of the first data frame retransmitted on the first link is shorter than the length of the third data frame transmitted on the second link, the STA1 and/or STA2 may add padding (e.g., padding bit(s), padding field) to a frame to match the transmission end times of the frames. For example, padding bit(s) may be added to the first or third data frame.

Alternatively, the STA1 may only perform channel sensing without performing a backoff operation. The STA1 may immediately retransmit the first data frame if the channel is in an idle state until reception of the BA frame from the STA2 ends on the second link.

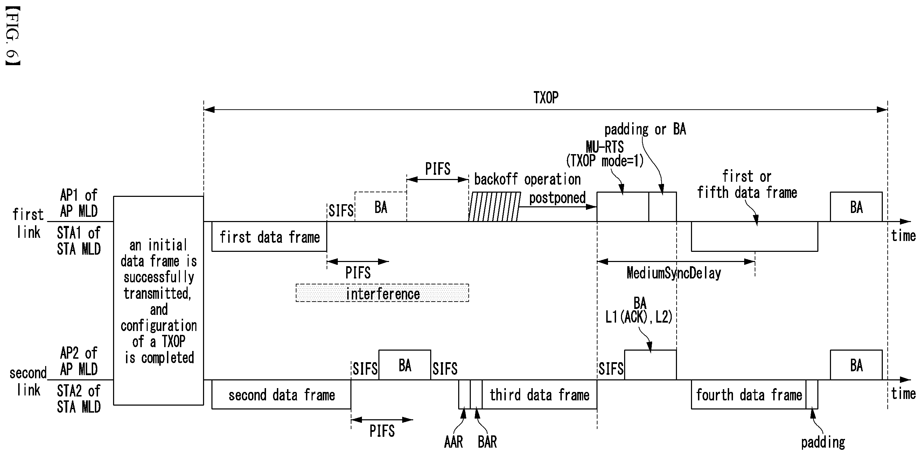

FIG. 6 is a timing diagram illustrating a fourth exemplary embodiment of an error recovery method of an NSTR device in multi-link synchronized transmission.

As shown in FIG. 6, the STA1 of the STA MLD may successfully transmit an initial data frame on the first link. That is, the STA1 may receive a reception response frame for the initial data frame, and a TXOP may be successfully configured. The STA1 may be a TXOP holder. The STA2 of the STA MLD may successfully transmit an initial data frame on the second link. That is, the STA2 may receive a reception response frame for the initial data frame, and a TXOP may be successfully configured. The STA2 may be a TXOP holder.

Each of the STA1 and STA2 may transmit one or more data frames within the TXOP. A difference between a transmission end time of a first data frame of the STA1 on the first link and a transmission end time of a second data frame of the STA2 on the second link may be up to 8us. The transmission end time of the first data frame of the STA1 on the first link may be before the transmission end time of the second data frame of the STA2 on the second link. When the STA1 performs a channel sensing operation (e.g., monitoring operation) to receive a reception response frame for the first data frame during a PIFS from the transmission end time of the first data frame on the first link, the STA1 may detect a power equal to or greater than a specific power level due to interference. The specific power level may mean a specific strength level.

A case where a frame is not decoded and a signal equal to or greater than a specific power level is detected may be referred to as energy detection (ED). If ED occurs during a PIFS from the transmission end time of the first data frame, the STA1 may determine that a channel is in a busy state on the first link. In the instant case, the STA1 may not perform a retransmission operation of the first data frame according to a PIFS recovery procedure.

Even in a situation where the first link is occupied by a communication node causing interference to the STA1, the STA2 may transmit a third data frame on the second link. A header of the third data frame transmitted by the STA2 may include a block ack request (BAR). The BAR may be used to notify that a reception response frame for the first data frame transmitted on the first link has not been received. The BAR may include at least one of a sequence number (SN) or link number of the first data frame associated with the reception response frame.

The header of the third data frame transmitted by the STA2 may include an AP assist request (AAR). The AAR may be used to request transmission of a trigger frame that provides a transmission opportunity within the remaining time of the TXOP on the first link. The header (e.g., MAC header) of the third data frame may include the BAR and/or AAR. The BAR and AAR may be included in the header of the data frame in form of 'A-control'. That is, the BAR may be referred to as 'BAR A-control' and the AAR may be referred to as 'AAR A-control'. Alternatively, the third data frame may be configured in form of an aggregated (A)-MPDU to include the BAR and AAR in the third data frame. For example, the third data frame may include a BlockAckReq frame and a QoS-Null frame. The BlockAckReq frame may include the BAR. An A-control field of the QoS-Null frame may include the AAR. A transmitter address (TA) of the BlockAckReq frame or/and the QoS-Null frame may be a MAC address of the STA1 on the first link or the STA2 on the second link. A receiver address (RA) thereof may be a MAC address of the AP1 on the first link or the AP2 on the second link.

The AP2 of the AP MLD may receive the third data frame from the STA2, and identify the BAR and/or AAR included in the header (e.g., MAC header) of the third data frame. Even when the AP1 of the AP MLD transmits a reception response frame for the first data frame on the first link, the header of the third data frame received by the AP2 of the AP MLD may include the BAR. This may mean that the STA1 does not receive the reception response frame of the AP1.

Since the AAR is included in the MAC header of the third data frame received by the AP2 of the AP MLD, the AP1 of the AP MLD may transmit a trigger frame on the first link in an available transmission time. The available transmission time may be a time when transmission of the third data frame of the STA2 ends and the STA1 is able to receive on the first link. The AP1 of the AP MLD may perform a backoff operation (e.g., channel access procedure) on the first link from a time when the AP2 of the AP MLD decodes the AAR included in the MAC header of the third data frame. Alternatively, the AP1 may not receive a frame from the STA1 during a PIFS from the transmission end time of the reception response frame for the first data frame. In the instant case, the AP1 may determine that the TXOP of the STA1 is terminated, and may perform a backoff operation (e.g., channel access procedure) on the first link from a time at which the TXOP is terminated.

While the third data frame is being transmitted on the second link, the backoff operation of the AP1 may succeeds on the first link. In the instant case, if an AC of the successful backoff operation is equal to an AC of the first data frame or if a TXOP limit for the AC of the successful backoff operation is greater than or equal to the remaining time of the TXOP, the AP1 may maintain the backoff counter value at 0, and may wait until the transmission end time of the third data frame. The AP1 may transmit a trigger frame on the first link at the transmission end time of the third data frame.

A condition for starting a backoff operation for transmission of the trigger frame and/or a condition for transmitting the trigger frame may be a case when a frame is not received from the STA1 on the first link, and a frame received on the second link includes the BAR and/or AAR. The AP2 of the AP MLD may generate a reception response frame including reception state information of the first data frame received on the first link and reception state information of the third data frame by referring to the BAR included in the header of the third data frame, and transmit the reception response frame on the second link. Alternatively, the AP1 of the AP MLD may transmit a reception response frame for the first data frame along with the trigger frame after completion of the backoff operation. In the instant case, the trigger frame and the reception response frame may be configured in form of an A-MPDU.

The trigger frame transmitted by the AP1 of the AP MLD on the first link may be a multi user (MU)-RTS frame. The MU-RTS frame may have a TXOP sharing mode 1. A reception operation of a clear to send (CTS) frame, which is a response frame for the MT-RTS frame, may be omitted. That is, the STA1 may transmit a data frame (e.g., the first data frame (i.e. retransmitted data frame) or a fifth data frame (i.e. new data frame)) on the first link after a SIFS elapses from a time of receiving the MU-RTS frame.

The AP1 may set a duration field of the MU-RTS frame to the remaining time of the initially configured TXOP. The STA1 and/or STA2 may set the transmission end times of the frames to be the same. For example, the transmission end times of the first or fifth data frame of the STA1 may be set to be the same as the transmission end time of the fourth data frame of the STA2.

Alternatively, the trigger frame transmitted by the AP1 of the AP MLD on the first link may be a general trigger frame. The general trigger frame may include information indicating the size of the frame that STA1 needs to transmit (e.g., uplink length (UL length) information). The STA1 may generate a frame (e.g., data frame) with a size according to the information included in the general trigger frame, and transmit the frame. The size of the data frame may be set so that transmission end times on the first link and the second link coincide with each other.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the scope of the disclosure. The scope of the invention is defined by the following claims.

## Claims

1. A method of a first device, the method comprising:
configuring a transmit opportunity, TXOP;
transmitting, to a second device, a first data frame within the TXOP on a first link;
transmitting, to the second device, a second data frame within the TXOP on a second link;
performing a monitoring operation for receiving a first reception response frame for the first data frame on the first link during a preset time from a transmission end time of the first data frame;
in response that the first reception response frame is not received, determining whether to perform a retransmission operation of the first data frame by considering a state of the second link; and
in response to determining the retransmission operation not to be performed, early terminating the TXOP of the first link among the TXOPs on the first link, and performing a backoff operation.

2. The method of claim 1, wherein transmission of the first data frame and transmission of the second data frame overlap at least partially in time.

3. The method of claim 1, further comprising: performing the retransmission operation of the first data frame in response that the backoff operation succeeds on the first link.

4. The method of claim 1, wherein the state of the second link is a state where a time period, in which the retransmission operation of the first data frame is to be performed on the first link, overlaps at least partially in time with a time period, in which a reception operation of a second reception response frame for the second data frame is performed on the second link.

5. The method of claim 1, wherein a case where the retransmission operation is determined not to be performed corresponds to a case where the retransmission operation interferes with one or more frames transmitted or received on the second link.

6. The method of claim 1, wherein the TXOP is configured in response that a reception response frame for an initial data frame transmitted to the second device is received, the configuring of the TXOP is performed on both the first link and the second link, and the preset time is a point coordination function, PCF, interframe space, PIFS.

7. The method of claim 1, wherein the first device is a non-simultaneous transmit and receive, NSTR, station, STA, multi-link device, MLD, the second device is an access point, AP, MLD, operations on the first link are performed between a first STA affiliated with the first device and a first AP affiliated with the second device, and operations on the second link are performed between a second STA affiliated with the first device and a second AP affiliated with the second device.

8. The method of claim 1, further comprising: transmitting a third data frame on the second link after the backoff operation starts on the first link, wherein the backoff operation on the first link is stopped in response that a transmission operation of the third data frame is performed on the second link, and the backoff operation on the first link is resumed after transmission of the third data frame on the second link ends.

9. The method of claim 8, further comprising:
in response that the backoff operation succeeds on the first link, and a delay time does not elapse from a transmission end time of the third data frame on the second link, maintaining a backoff counter value of the backoff operation at 0; and
in response that the delay time elapses, performing the retransmission operation of the first data frame on the first link.

10. The method of claim 1, further comprising:
in response that the backoff operation succeeds before a reception end time of a second reception response frame for the second data frame on the second link, maintaining a backoff counter value of the backoff operation at 0; and
performing the retransmission operation of the first data frame on the first link after the reception end time of the second reception response frame on the second link.

11. The method of claim 10, further comprising: transmitting a third data frame on the second link after the reception end time of the second reception response frame, wherein an end time of the retransmitted first data frame and an end time of the third data frame are set to be equal.

12. A first device comprising a processor,
wherein the processor causes the first device to:
configure a transmit opportunity, TXOP;
transmit, to a second device, a first data frame within the TXOP on a first link;
transmit, to the second device, a second data frame within the TXOP on a second link;
perform a monitoring operation for receiving a first reception response frame for the first data frame on the first link during a preset time from a transmission end time of the first data frame;
in response to that the first reception response frame is not received, determine whether to perform a retransmission operation of the first data frame by considering a state of the second link; and
in response to determining the retransmission operation not to be performed, early terminate the TXOP of the first link among the TXOPs on the first link, and perform a backoff operation.

13. The first device of claim 12, wherein the state of the second link is a state where a time period, in which the retransmission operation of the first data frame is to be performed on the first link, overlaps at least partially in time with a time period, in which a reception operation of a second reception response frame for the second data frame is performed on the second link.

14. The first device of claim 12, wherein the processor further causes the first device to transmit a third data frame on the second link after the backoff operation starts on the first link, wherein the backoff operation on the first link is stopped in response that a transmission operation of the third data frame is performed on the second link, and the backoff operation on the first link is resumed after transmission of the third data frame on the second link ends.

15. The first device of claim 12, wherein the processor further causes the first device to:
in response that the backoff operation succeeds before a reception end time of a second reception response frame for the second data frame on the second link, maintain a backoff counter value of the backoff operation at 0; and
perform the retransmission operation of the first data frame on the first link after the reception end time of the second reception response frame on the second link.

## Patentansprüche

1. Verfahren einer ersten Vorrichtung, wobei das Verfahren aufweist:
Konfigurieren einer Sendemöglichkeit, TXOP,
Senden eines ersten Datenrahmens innerhalb der TXOP auf einer ersten Verbindung an eine zweite Vorrichtung,
Senden eines zweiten Datenrahmens innerhalb der TXOP auf einer zweiten Verbindung an die zweite Vorrichtung,
Durchführen eines Überwachungsvorgangs zum Empfangen eines ersten Empfangsantwortrahmens für den ersten Datenrahmen auf der ersten Verbindung während einer voreingestellten Zeit ab einem Sendeendzeitpunkt des ersten Datenrahmens,
als Reaktion darauf, dass der erste Empfangsantwortrahmen nicht empfangen wird, Ermitteln, ob ein Neusendevorgang des ersten Datenrahmens durchzuführen ist, unter Berücksichtigung eines Zustands der zweiten Verbindung, und
als Reaktion auf das Ermitteln, dass der Neusendevorgang nicht durchzuführen ist, vorzeitiges Beenden der TXOP der ersten Verbindung unter den TXOPs auf der ersten Verbindung und Durchführen eines Backoff-Vorgangs.

2. Verfahren gemäß Anspruch 1, wobei sich das Senden des ersten Datenrahmens und das Senden des zweiten Datenrahmens zumindest teilweise zeitlich überschneiden.

3. Verfahren gemäß Anspruch 1, ferner aufweisend:
Durchführen des Neusendevorgangs des ersten Datenrahmens als Reaktion darauf, dass der Backoff-Vorgang auf der ersten Verbindung erfolgreich ist.

4. Verfahren gemäß Anspruch 1, wobei der Zustand der zweiten Verbindung ein Zustand ist, in dem sich ein Zeitraum, in dem der Neusendevorgang des ersten Datenrahmens auf der ersten Verbindung durchzuführen ist, zumindest teilweise zeitlich mit einem Zeitraum überschneidet, in dem ein Empfangsvorgang eines zweiten Empfangsantwortrahmens für den zweiten Datenrahmen auf der zweiten Verbindung durchgeführt wird.

5. Verfahren gemäß Anspruch 1, wobei ein Fall, in dem ermittelt wird, dass der Neusendevorgang nicht durchzuführen ist, mit einem Fall korrespondiert, in dem der Neusendevorgang einen oder mehrere Rahmen beeinträchtigt, die auf der zweiten Verbindung gesendet oder empfangen werden.

6. Verfahren gemäß Anspruch 1, wobei die TXOP als Reaktion darauf konfiguriert wird, dass ein Empfangsantwortrahmen für einen an die zweite Vorrichtung gesendeten Anfangsdatenrahmen empfangen wird, wobei das Konfigurieren der TXOP sowohl auf der ersten Verbindung als auch auf der zweiten Verbindung durchgeführt wird und wobei die voreingestellte Zeit ein Punktkoordinationsfunktions-, PCF-, Zwischenrahmenabstand, PIFS, ist.

7. Verfahren gemäß Anspruch 1, wobei die erste Vorrichtung eine Nicht-simultanes-Senden-und-Empfangen-, NSTR-, Station-, STA-, Mehrverbindungsvorrichtung, MLD, ist, die zweite Vorrichtung eine Zugangspunkt-, AP-, -MLD ist, Vorgänge auf der ersten Verbindung zwischen einer ersten STA, die der ersten Vorrichtung zugeordnet ist, und einem ersten AP, der der zweiten Vorrichtung zugeordnet ist, durchgeführt werden, und Vorgänge auf der zweiten Verbindung zwischen einer zweiten STA, die der ersten Vorrichtung zugeordnet ist, und einem zweiten AP, der der zweiten Vorrichtung zugeordnet ist, durchgeführt werden.

8. Verfahren gemäß Anspruch 1, ferner aufweisend: Senden eines dritten Datenrahmens auf der zweiten Verbindung, nachdem der Backoff-Vorgang auf der ersten Verbindung begonnen hat, wobei der Backoff-Vorgang auf der ersten Verbindung als Reaktion darauf angehalten wird, dass ein Sendevorgang des dritten Datenrahmens auf der zweiten Verbindung durchgeführt wird, und der Backoff-Vorgang auf der ersten Verbindung wieder aufgenommen wird, nachdem das Senden dritten Datenrahmens auf der zweiten Verbindung beendet ist.

9. Verfahren gemäß Anspruch 8, ferner aufweisend:
als Reaktion darauf, dass der Backoff-Vorgang auf der ersten Verbindung erfolgreich ist und eine Verzögerungszeit ab einem Sendeendzeitpunkt des dritten Datenrahmens auf der zweiten Verbindung nicht verstrichen ist, Halten eines Backoff-Zählerwerts des Backoff-Vorgangs auf 0, und
als Reaktion darauf, dass die Verzögerungszeit verstrichen ist, Durchführen des Neusendevorgangs des ersten Datenrahmens auf der ersten Verbindung.

10. Verfahren gemäß Anspruch 1, ferner aufweisend:
als Reaktion darauf, dass der Backoff-Vorgang vor einem Empfangsendzeitpunkt eines zweiten Empfangsantwortrahmens für den zweiten Datenrahmen auf der zweiten Verbindung erfolgreich ist, Halten eines Backoff-Zählerwerts des Backoff-Vorgangs auf 0, und
Durchführen des Neusendevorgangs des ersten Datenrahmens auf der ersten Verbindung nach dem Empfangsendzeitpunkt des zweiten Empfangsantwortrahmens auf der zweiten Verbindung.

11. Verfahren gemäß Anspruch 10, ferner aufweisend:
Senden eines dritten Datenrahmens auf der zweiten Verbindung nach dem Empfangsendzeitpunkt des zweiten Empfangsantwortrahmens, wobei ein Endzeitpunkt des neu gesendeten ersten Datenrahmens und ein Endzeitpunkt des dritten Datenrahmens gleichgesetzt werden.

12. Erste Vorrichtung, die einen Prozessor aufweist,
wobei der Prozessor die erste Vorrichtung veranlasst zum:
Konfigurieren einer Sendemöglichkeit, TXOP,
Senden eines ersten Datenrahmens innerhalb der TXOP auf einer ersten Verbindung an eine zweite Vorrichtung,
Senden eines zweiten Datenrahmens innerhalb der TXOP auf einer zweiten Verbindung an die zweite Vorrichtung,
Durchführen eines Überwachungsvorgangs zum Empfangen eines ersten Empfangsantwortrahmens für den ersten Datenrahmen auf der ersten Verbindung während einer voreingestellten Zeit ab einem Sendeendzeitpunkt des ersten Datenrahmens,
als Reaktion darauf, dass der erste Empfangsantwortrahmen nicht empfangen wird, Ermitteln, ob ein Neusendevorgang des ersten Datenrahmens durchzuführen ist, unter Berücksichtigung eines Zustands der zweiten Verbindung, und
als Reaktion auf das Ermitteln, dass der Neusendevorgang nicht durchzuführen ist, vorzeitiges Beenden der TXOP der ersten Verbindung unter den TXOPs auf der ersten Verbindung und Durchführen eines Backoff-Vorgangs.

13. Erste Vorrichtung gemäß Anspruch 12, wobei der Zustand der zweiten Verbindung ein Zustand ist, in dem sich ein Zeitraum, in dem der Neusendevorgang des ersten Datenrahmens auf der ersten Verbindung durchzuführen ist, zumindest teilweise zeitlich mit einem Zeitraum überschneidet, in dem ein Empfangsvorgang eines zweiten Empfangsantwortrahmens für den zweiten Datenrahmen auf der zweiten Verbindung durchgeführt wird.

14. Erste Vorrichtung gemäß Anspruch 12, wobei der Prozessor ferner die erste Vorrichtung veranlasst, einen dritten Datenrahmen auf der zweiten Verbindung zu senden, nachdem der Backoff-Vorgang auf der ersten Verbindung begonnen hat, wobei der Backoff-Vorgang auf der ersten Verbindung als Reaktion darauf angehalten wird, dass ein Sendevorgang des dritten Datenrahmens auf der zweiten Verbindung durchgeführt wird, und der Backoff-Vorgang auf der ersten Verbindung wieder aufgenommen wird, nachdem das Senden des dritten Datenrahmens auf der zweiten Verbindung beendet ist.

15. Erste Vorrichtung gemäß Anspruch 12, wobei der Prozessor die erste Vorrichtung ferner veranlasst zum:
Halten eines Backoff-Zählwertes des Backoff-Vorgangs auf 0 als Reaktion darauf, dass der Backoff-Vorgang vor einem Empfangsendzeitpunkt eines zweiten Empfangsantwortrahmens für den zweiten Datenrahmen auf der zweiten Verbindung erfolgreich ist, und
Durchführen des Neusendevorgangs des ersten Datenrahmens auf der ersten Verbindung nach dem Empfangsendzeitpunkt des zweiten Empfangsantwortrahmens auf der zweiten Verbindung.

## Revendications

1. Procédé d'un premier dispositif, le procédé comprenant :
la configuration d'une opportunité de transmission, TXOP ;
la transmission, vers un deuxième dispositif, d'une première trame de données au cours de la TXOP sur une première liaison ;
la transmission, vers le deuxième dispositif, d'une deuxième trame de données au cours de la TXOP sur une deuxième liaison ;
la réalisation d'une opération de surveillance pour la réception d'une première trame de réponse de réception pour la première trame de données sur la première liaison pendant un délai prédéfini à compter d'un temps de fin de transmission de la première trame de données ;
en réponse au fait que la première trame de réponse de réception n'est pas reçue, la détermination de s'il convient d'effectuer une opération de retransmission de la première trame de données en tenant compte d'un état de la deuxième liaison ; et
en réponse à la détermination selon laquelle l'opération de retransmission ne doit pas être effectuée, la terminaison prématurée de la TXOP de la première liaison parmi les TXOP sur la première liaison, et l'exécution d'une opération de recul.

2. Procédé selon la revendication 1, dans lequel la transmission de la première trame de données et la transmission de la deuxième trame de données se chevauchent au moins partiellement dans le temps.

3. Procédé selon la revendication 1, comprenant en outre : l'exécution de l'opération de retransmission de la première trame de données en réponse au succès de l'opération de recul sur la première liaison.

4. Procédé selon la revendication 1, dans lequel l'état de la deuxième liaison est un état dans lequel une période de temps, durant laquelle l'opération de retransmission de la première trame de données doit être effectuée sur la première liaison, se chevauche au moins partiellement dans le temps avec une période de temps, durant laquelle une opération de réception d'une deuxième trame de réponse de réception pour la deuxième trame de données est effectuée sur la deuxième liaison.

5. Procédé selon la revendication 1, dans lequel un cas où il est déterminé que l'opération de retransmission ne doit pas être effectuée correspond à un cas où l'opération de retransmission interfère avec une ou plusieurs trames transmises ou reçues sur la deuxième liaison.

6. Procédé selon la revendication 1, dans lequel la TXOP est configurée en réponse à la réception d'une trame de réponse de réception pour une trame de données initiale transmise au deuxième dispositif, la configuration de la TXOP est effectuée à la fois sur la première liaison et sur la deuxième liaison, et le temps prédéfini est un espacement inter-trames, PIFS, de fonction de coordination de points, PCF.

7. Procédé selon la revendication 1, dans lequel le premier dispositif est un dispositif multi-liaison, MLD, de station, STA, à transmission et réception non simultanées, NSTR, le deuxième dispositif est un MLD point d'accès, AP, les opérations sur la première liaison sont effectuées entre une première STA affiliée au premier dispositif et un premier AP affilié au deuxième dispositif, et les opérations sur la deuxième liaison sont effectuées entre une deuxième STA affiliée au premier dispositif et un deuxième AP affilié au deuxième dispositif.

8. Procédé selon la revendication 1, comprenant en outre : la transmission d'une troisième trame de données sur la deuxième liaison après le début de l'opération de recul sur la première liaison, dans lequel l'opération de recul sur la première liaison est interrompue en réponse à l'exécution d'une opération de transmission de la troisième trame de données sur la deuxième liaison, et l'opération de recul sur la première liaison est reprise une fois que la transmission de la troisième trame de données sur la deuxième liaison est terminée.

9. Procédé selon la revendication 8, comprenant en outre :
en réponse au fait que l'opération de recul est un succès sur la première liaison et qu'un temps de retard ne s'est pas écoulé depuis un temps de fin de transmission de la troisième trame de données sur la deuxième liaison, le maintien à 0 d'une valeur de compteur de recul de l'opération de recul ; et
en réponse au fait que le temps de retard s'est écoulé, l'exécution de l'opération de retransmission de la première trame de données sur la première liaison.

10. Procédé selon la revendication 1, comprenant en outre :
en réponse au fait que l'opération de recul est un succès avant un temps de fin de réception d'une deuxième trame de réponse de réception pour la deuxième trame de données sur la deuxième liaison, le maintien d'une valeur de compteur de recul de l'opération de recul à 0 ; et
l'exécution de l'opération de retransmission de la première trame de données sur la première liaison après le temps de fin de réception de la deuxième trame de réponse de réception sur la deuxième liaison.

11. Procédé selon la revendication 10, comprenant en outre : la transmission d'une troisième trame de données sur la deuxième liaison après le temps de fin de réception de la deuxième trame de réponse de réception, dans lequel un temps de fin de la première trame de données retransmise et un temps de fin de la troisième trame de données sont définies pour être égales.

12. Premier dispositif comprenant un processeur,
dans lequel le processeur amène le premier dispositif à :
configurer une opportunité de transmission, TXOP ;
transmettre, à un deuxième dispositif, une première trame de données au cours de la TXOP sur une première liaison ;
transmettre, au deuxième dispositif, une deuxième trame de données au cours de la TXOP sur une deuxième liaison ;
effectuer une opération de surveillance pour recevoir une première trame de réponse de réception pour la première trame de données sur la première liaison pendant un délai prédéfini à compter d'un temps de fin de transmission de la première trame de données ;
en réponse au fait que la première trame de réponse de réception n'est pas reçue, déterminer s'il convient d'effectuer une opération de retransmission de la première trame de données en tenant compte d'un état de la deuxième liaison ; et
en réponse à la détermination selon laquelle l'opération de retransmission ne doit pas être effectuée, terminer prématurément la TXOP de la première liaison parmi les TXOP sur la première liaison, et effectuer une opération de recul.

13. Premier dispositif selon la revendication 12, dans lequel l'état de la deuxième liaison est un état dans lequel une période de temps, durant laquelle l'opération de retransmission de la première trame de données doit être effectuée sur la première liaison, chevauche au moins partiellement dans le temps une période de temps, durant laquelle une opération de réception d'une deuxième trame de réponse de réception pour la deuxième trame de données est effectuée sur la deuxième liaison.

14. Premier dispositif selon la revendication 12, dans lequel le processeur amène en outre le premier dispositif à transmettre une troisième trame de données sur la deuxième liaison après le début de l'opération de recul sur la première liaison, dans lequel l'opération de recul sur la première liaison est interrompue en réponse à l'exécution d'une opération de transmission de la troisième trame de données sur la deuxième liaison, et l'opération de recul sur la première liaison est reprise une fois la transmission de la troisième trame de données sur la deuxième liaison terminée.

15. Premier dispositif selon la revendication 12, dans lequel le processeur amène en outre le premier dispositif à :
en réponse au fait que l'opération de recul est un succès avant un temps de fin de réception d'une deuxième trame de réponse de réception pour la deuxième trame de données sur la deuxième liaison, maintenir à 0 une valeur de compteur de recul de l'opération de recul ; et
effectuer l'opération de retransmission de la première trame de données sur la première liaison après le temps de fin de réception de la deuxième trame de réponse de réception sur la deuxième liaison.
